# FASCICULE DE BREVET EUROPEEN

(11) **EP 0 404 677 B1**
(45) Date de publication et mention de la délivrance du brevet: **05.05.1993**
(21) Numéro de dépôt: 90401751.4
(22) Date de dépôt: 21.06.1990
(51) Int. Cl.: C03B 27/004

(54) **Dispositif pour la trempe par contact de vitrages**
Vorrichtung zum Härten von Glasscheiben durch Kontakt
Apparatus for tempering glass-sheets by contact

(30) Priorité: 22.06.1989 FR 8908311
(43) Date de publication de la demande: 27.12.1990
(73) Titulaire: SAINT-GOBAIN VITRAGE INTERNATIONAL, 92400 Courbevoie (FR)
(72) Inventeur: Vanaschen, Luc, B-4700 Eupen (BE); Kuster, Hans-Werner, D-5100 Aachen (DE); Bremer, Carsten, Wassenberg 4 (DE)
(74) Mandataire: Menes, Catherine

(56) Documents cités:
- EP-A- 0 277 074
- FR-A- 1 540 411
- US-A- 3 694 182

## Description

La présente invention concerne un dispositif pour la trempe par contact d'une feuille de verre avec des contraintes de bord renforcées, ladite feuille subissant éventuellement également un bombage par contact. L'invention s'applique notamment à la production de vitrages trempés thermiquement, plats ou présentant une certaine courbure et destinés par exemple aux véhicules automobiles.

Habituellement, la trempe thermique de vitrages s'effectue par soufflage d'air froid sur les deux faces des feuilles de verre échauffées préalablement à une température idoine. Dans certains cas, il peut cependant être plus avantageux de procéder à une trempe dite par contact en plaçant les vitrages en contact superficiel direct avec des plaques de compression refroidies par exemple à l'eau, du type plateaux de compression ou moules de compression. Le contact direct avec des plaques de compression et de refroidissement permet d'éviter notamment des déformations ou des gauchissements du vitrage qui apparaissent parfois lorsque le vitrage n'est maintenu que le long de ses bords et/ou d'un seul côté pendant la trempe. Le procédé de trempe par contact peut également être avantageux pour la fabrication de vitrages bombés et trempés en verre très mince. En effet, le verre mince se refroidit très rapidement et lorsque conformément aux procédés de bombage-trempe traditionnel, la feuille de verre est tout d'abord bombée avant d'être transférée au poste de trempe par soufflage d'air froid, le refroidissement du verre pendant le transfert peut être tel que sa température est alors insuffisante pour une trempe thermique de qualité. L'emploi de plaques de compression constituées par des moules dont la forme correspond à celle que l'on souhaite conférer au vitrage permet de supprimer ce transfert, bombage et trempe du vitrage s'effectuant en quelque sorte en une seule opération.

De la demande de brevet EP-A-277 074, il est connu de réduire la fragilité des bords reprochées aux vitrages trempés par contact de la façon usuelle connue par exemple de FR-A-1 580 305 en créant une différence de température entre les bords et le centre du vitrage, notamment en soufflant un gaz de refroidissement sur les bords du vitrage. Dans la demande précitée, il est décrit un dispositif dans lequel les surfaces périphériques des vitrages sont refroidies au moyen de jets d'air pendant que se poursuit l'opération de trempe par contact. Toujours selon EP-A-277 074, ces jets d'air sont produits par des rampes tubulaires disposées parallèlement au bord du verre, à l'extérieur des plaques de refroidissement et de compression. Ces rampes sont munies d'ajutages à fentes pour l'émission des jets d'air.

Ce soufflage d'air froid sur les surfaces périphériques autorisent les trois configurations envisageables pour les plaques de compression et de refroidissement et le vitrage. Le vitrage peut ainsi être plus grand que ces plaques, de sorte que ses extrémités débordent des plaques ; il peut être de la même taille que celles-ci avec alors une surface périphérique qui se termine au ras des plaques ou encore être plus petit que les plaques de telle sorte que la surface périphérique du vitrage à refroidir par de l'air soit disposée en retrait par rapport aux surfaces de délimitation latérales des plaques de refroidissement et de compression et qu'entre les plaques se forme ainsi une gorge dont la surface de base est constituée par la surface périphérique du vitrage.

Il est également connu de la demande de brevet DE-A-1 771 790, un dispositif de trempe par contact au moyen de plateaux de compression, dont le premier est constitué d'un plateau métallique rigide refroidi à l'eau et dont l'autre plateau est formé d'un boîtier fermé par une membrane étanche résistant à la chaleur, qui peut être alimenté au moyen d'eau sous pression et dont la membrane établit le contact avec le vitrage.

Dans ce cas également, les plateaux de compression sont plus grands que les vitrages. Le refroidissement des surfaces périphériques des vitrages doit alors s'effectuer par le fait que les vitrages sont chanfreinés du côté qui s'applique contre la membrane d'une manière telle que la membrane refroidie puisse s'appliquer sur la surface chanfreinée. Un tel chanfrein des bords des vitrages ne peut cependant pas être réalisé dans le cas de vitrages d'automobiles.

Pour diverses raisons, cette technique s'avère souvent plus économique, un jeu unique des plaques de refroidissement et de compression pouvant convenir à des vitrages de différentes tailles, mais de même rayon de courbure. D'autre part, il est plus facile d'obtenir des contraintes de bord renforcées avec des plaques de refroidissement et de compression plus grandes que la feuille de verre, car dans ce cas l'intensité du soufflage sur les bords peut être assez faible, alors qu'avec des plaques plus petites que la feuille de verre, le soufflage sert de plus à la trempe proprement dite des zones marginales non recouvertes par les plaques de refroidissement. Il est avantageux pour la trempe par contact, d'utiliser des dispositifs comportant des plaques de compression plus grandes que les vitrages à tremper. Les dispositifs connus ne permettent cependant pas d'atteindre un état de tension satisfaisant des vitrages, que ce soit à proximité immédiate de leurs tranches ou sur l'ensemble de leur surface périphérique.

L'invention a pour but de perfectionner un dispositif du type décrit dans EP-A-277 074 d'une manière telle qu'il permette une trempe satisfaisante des vitrages sur toute leur surface, avec une contrainte des bords renforcée.

Le dispositif de trempe par contact selon l'invention comporte deux plaques de refroidissement et de compression entre lesquelles sont disposées des rampes de soufflage parallèlépipédiques, lesdites rampes comportant d'une part des lumières pour les jets d'air de refroidissement dirigés vers la surface périphérique du vitrage et d'autre part entre ces lumières de soufflage ouvertures d'évacuation de l'air, lesdites lumières ayant un diamètre au moins égal à 1 mm et au plus égal à l'épaisseur du vitrage et lesdites ouvertures ayant une section transversale qui vaut au moins 3 fois celle des lumières, les dimensions des plaques de refroidissement et de compression ainsi que l'agencement et/ou la largeur des rampes étant tels que la distance entre les orifices des lumières et la surface périphérique du vitrage qui leur est opposée soit comprise entre 2 et 6 fois le diamètre desdites lumières.

Suivant l'agencement proposé par l'invention, les rampes parallèlépipédiques de soufflage ferment l'espace intercalaire entre les deux plaques de compression et de refroidissement et fournissent des canaux aux dimensions définies pour l'émission des jets d'air de refroidissement et des canaux d'évacuation aux dimensions également définies pour l'air chauffé refluant de la surface périphérique du vitrage. Cet agencement offre ainsi des conditions constantes et contrôlées pour le refroidissement à l'air de la surface périphérique du vitrage. De cette façon et grâce au dimensionnement conforme à l'invention des sections des lumières de soufflage et des ouvertures d'évacuation, ainsi que de la distance entre les ouvertures d'évacuation et la surface périphérique du vitrage, sont remplies les conditions qui garantissent un état de trempe optimum dans la région marginale du vitrage, et en particulier dans la région de sa surface périphérique.

Les lumières de soufflage et les ouvertures d'évacuation sont avantageusement disposées en succession alternante. Dans ce cas, la section d'une ouverture d'évacuation vaut de préférence à peu près quatre fois celle d'une lumière de soufflage.

Au cas où les lumières et les canaux d'évacuation ne peuvent pas alterner de manière rigoureuse, il faut que la somme des sections des canaux d'évacuation vaille au moins trois fois et de préférence quatre fois la somme des sections des lumières d'ajutages.

Les rampes de soufflage sont par exemple constituées de sections individuelles qui, le cas échéant, sont assemblées, en laissant un petit intervalle, en une barre à ajutages périphérique. De préférence, toutefois, les rampes de soufflage constituent un cadre fermé tout autour du vitrage qui se trouve ainsi totalement enfermé dans un logement défini d'une part par les plaques de refroidissement et d'autre part par le cadre que constituent les rampes de soufflage, avec pour seules communications avec l'extérieur les ouvertures d'évacuation de l'air.

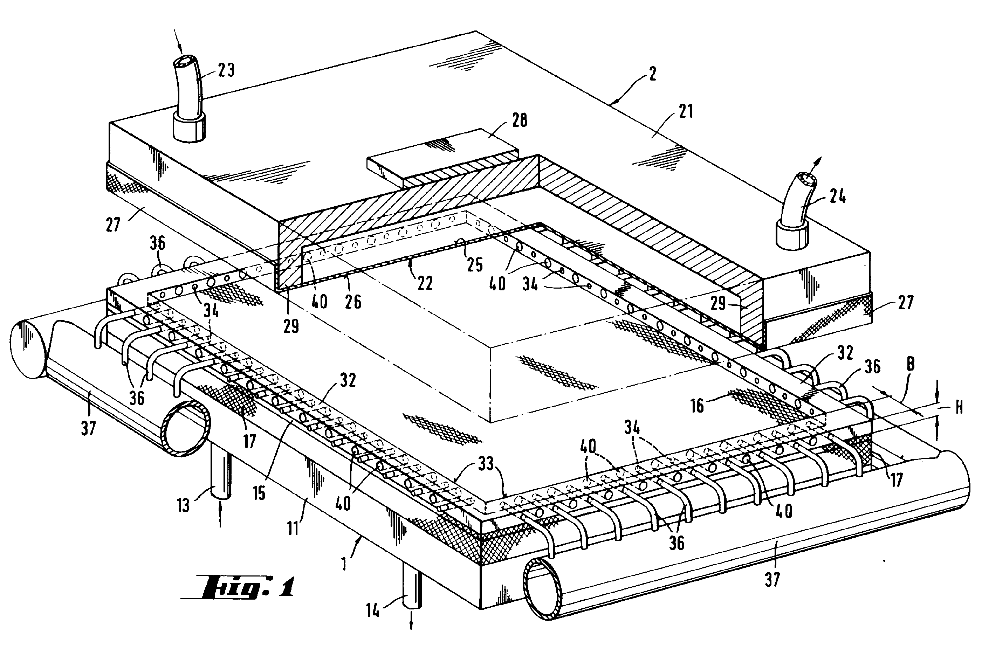

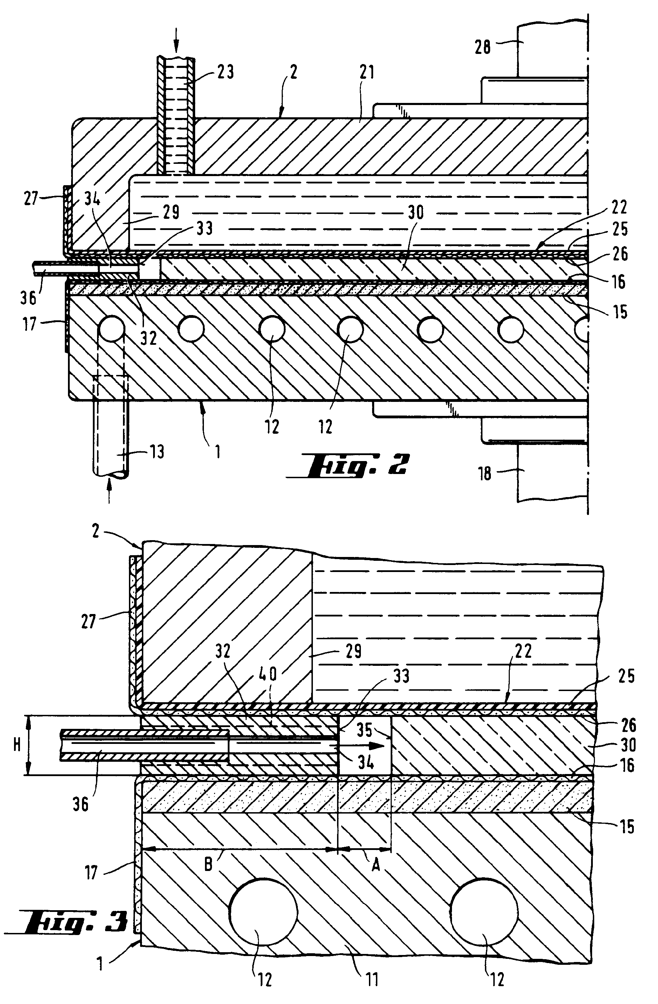

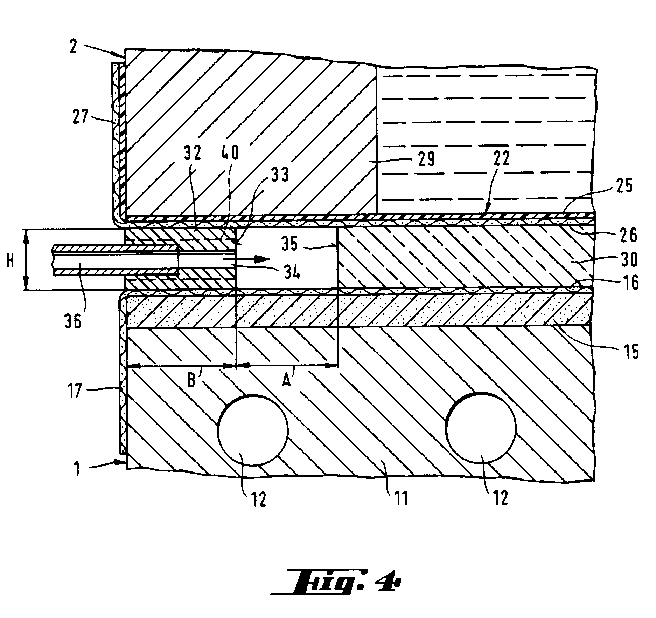

D'autres réalisation préférées de l'invention font l'objet des revendications dépendantes et ressortiront, en outre, de la description suivante d'un exemple de réalisation d'un dispositif conforme à l'invention faite en référence aux dessins annexés qui représentent :
. **figure 1:** une vue en perspective en partie arrachée d'un exemple de réalisation d'un dispositif de trempe par contact conforme à l'invention,
. **figure 2:** une vue en coupe verticale du dispositif représenté sur la figure 1, les plaques de refroidissement et de compression étant en position fermée,
. **figure 3:** une vue, à plus grande échelle, d'un fragment de la figure 2,
. **figure 4:** une vue également en coupe verticale d'un autre exemple de réalisation d'un dispositif.

Par souci de simplicité, l'exemple de réalisation représenté à la figure 1 montre un dispositif pour la fabrication de vitrages trempés plats, c'est-à-dire, un dispositif dans lequel les surfaces de contact des deux plaques de refroidissement et de compression sont planes. Cependant, il est bien entendu possible de réaliser des plaques de refroidissement et de compression sous la forme de plateaux de moulage à surface de contact courbe, de sorte que les vitrages peuvent être simultanément bombés et trempés à l'aide des plateaux de moulage.

Le dispositif comprend une plaque de refroidissement et de compression inférieure 1 de structure rigide et une plaque de refroidissement et de compression supérieure 2 présentant une surface de contact flexible. La plaque de refroidissement et de compression inférieure 1 est constituée d'une plaque métallique 11 en un métal de bonne conductibilité thermique, comme du cuivre ou de l'aluminium. La plaque métallique 11 est pourvue de canaux 12 dans lesquels passe l'eau de refroidissement. L'eau de refroidissement est admise par une conduite d'alimentation 13 et est évacuée par la conduite 14. Sur la surface de compression de la plaque métallique, il est prévu une couche 15 en une matière qui présente une résistance à la transmission de chaleur de préférence comprise entre 0,1x10⁻³ et 0,25x10⁻³ m² x K x W⁻¹, c'est-à-dire de bonnes propriétés de conductibilité thermique et en même temps un certain pouvoir de déformation élastique. Cette couche 15 a pour tâche d'assurer un contact optimal de toute la surface avec le vitrage. Elle a avantageusement une épaisseur d'environ 1 à 2 mm et peut par exemple, être à base de graphite lamellaire. Un tel matériau est par exemple commercialisé sous la marque SIGRAFLEX. Sur la couche élastique 15 est disposée une mince toile métallique 16 dont les régions marginales 17 sont fixées sur les faces périphériques du plateau métallique 11. La toile métallique 16 forme une couche de protection mécanique pour la couche élastique 15 et assure la fixation de cette couche élastique 15 sur le plateau métallique 11. La toile métallique 16 est en l'occurrence une toile à mailles très fines qui dans la direction perpendiculaire à son étendue superficielle doit présenter une faible résistance à la transmission de chaleur de préférence comprise entre 0,25 x 10⁻³ et 5 x 10⁻³ m² x K x W⁻¹, et dont l'épaisseur est de préférence comprise entre 0,1 et 0,3 mm. La toile métallique 16 peut, par exemple, être faite de fibres d'un alliage fer-chrome-nickel ou d'un alliage chrome-nickel à haute résistance à la chaleur. La plaque métallique 11 est fixée d'une manière adéquate sur un support 18.

La plaque de refroidissement et de compression supérieure 2 est constituée d'un boîtier métallique 21 fermé de manière étanche à sa partie inférieure par une membrane flexible 22 et rempli d'un liquide de refroidissement, comme de l'eau. L'eau est introduite sous une pression réglée et à une vitesse d'écoulement réglée par la conduite d'amenée 23 dans le boîtier 21 et ressort du boîtier 21 par la conduite 24. Un dispositif de régulation ici non représenté assure que la pression interne nécessaire dans le boîtier 21, pression qui est par exemple de l'ordre de 5 bars, ne soit établie que lorsque la presse est fermée, c'est-à-dire lorsque la membrane flexible 22 est appliquée contre le vitrage 30. La membrane flexible 22 doit présenter une faible résistance à la transmission de chaleur, dont la valeur exacte dépend de l'épaisseur du vitrage à tremper. Pour une épaisseur de vitrage de 3 mm, par exemple, la résistance à la transmission de chaleur de la membrane flexible doit être inférieure à 1,6 x 10⁻³ m² x K x W⁻¹. De plus, la matière constitutive de la membrane flexible doit présenter une bonne conductibilité thermique, ainsi qu'une bonne résistance à la chaleur. Une structure en couches constituée d'une pellicule 25 de 0,1 à 0,2 mm d'épaisseur en polytétrafluoroéthylène, qui est couverte sur sa face externe par une toile métallique 26, s'est avérée satisfaisante. La toile métallique 26 est en l'occurrence la même toile métallique mince de 0,1 à 0,3 mm d'épaisseur qui sert à couvrir la couche élastique 15 dans le moule à compression inférieur 1. Les régions marginales 27 de la pellicule 25 et de la toile métallique 26 sont fixées latéralement au boîtier métallique 21. Le boîtier métallique 21 est monté sur un support 28. Les supports 18 et 28 font partie d'une presse qui, comme telle, n'est pas représentée.

Des rampes de soufflage 32 sont disposées autour du vitrage, dans l'espace intercalaire entre les deux plaques de refroidissement et de compression. Ces rampes 32 forment ainsi un encadrement continu autour du vitrage et sont montées sur la plaque 1 rigide, tout le long du pourtour de cette plaque. Le cadre est formé d'une barre à ajutages en un métal approprié, par exemple en acier résistant à la corrosion, ayant une hauteur H correspondant à l'épaisseur du vitrage 30. La largeur B de la rampe 32 n'est en principe pas critique ; elle doit cependant être choisie telle que la distance A entre la surface interne 33 de la rampe sur laquelle se trouvent les orifices des lumières 34, et la surface périphérique 35 du vitrage 30 vaille deux à six fois le diamètre des lumières 34. Les lumières 34 sont raccordées par des tubulures 36 à un conduit de distribution 37 qui est raccordé par l'intermédiaire de conduites, non représentées, à un ventilateur de puissance adéquate qui fournit l'air nécessaire au refroidissement de la surface périphérique du vitrage. Les lumières 34 sont par exemple espacées de 10 à 25 mm l'une de l'autre et présentent un diamètre d'au moins 1 mm et inférieur à l'épaisseur du vitrage 30.

Entre deux lumières 34 voisines se trouve chaque fois une ouverture 40 de plus grande section qui s'étend parallèlement aux lumières et qui sert d'ouverture d'évacuation pour l'air de soufflage. La section transversale d'une ouverture d'évacuation vaut environ quatre fois celle d'une lumière 34 ; comme l'épaisseur de la rampe 32 est celle du vitrage 30, les ouvertures d'évacuation sont si nécessaires sous forme de fentes allongées.

Dans le cas de la forme d'exécution illustrée sur les figures 2 et 3, les dimensions du boîtier 21 de la plaque supérieure sont choisies telles que la section transversale de l'intérieur creux du boîtier 21 rempli d'eau de refroidissement soit plus grande que la superficie du vitrage 30, de sorte que la membrane flexible 22 s'étend de cette façon jusqu'au-delà de la surface périphérique 35. Dans les limites de la distance A entre la surface périphérique du vitrage 30 et la surface interne 33 du cadre 32, la membrane flexible 22 n'est pas soutenue. Dans cette forme d'exécution, il faut donc que la distance A ait une valeur qui se situe au voisinage de la limite inférieure du domaine conforme à l'invention. Sinon, la membrane flexible est davantage exposée au risque d'être soumise à une charge mécanique trop élevée sous la pression du liquide de refroidissement.

Pour éviter ce type de sollicitation mécanique de la membrane flexible, on peut choisir une forme d'exécution telle qu'elle est représentée sur la figure 4. Dans ce cas, les dimensions du boîtier formant le plateau de compression supérieur sont choisies telles que le diamètre intérieur du boîtier soit inférieur aux dimensions correspondantes de la surface du vitrage 30, de sorte que les parois latérales 29 prennent appui sur le vitrage 30. Dans la région alimentée en eau sous pression, la membrane flexible 22 est soutenue sur toute sa surface par le vitrage 30. Dans cette forme d'exécution également, l'effet de refroidissement produit par le refroidissement par contact et par le refroidissement à l'air simultané suffit, dans la région marginale immédiate du vitrage, pour produire une trempe satisfaisante dans la région de la surface périphérique 35 et dans les régions marginales adjacentes.

## Revendications

1. Dispositif pour la trempe par contact d'un vitrage, comportant deux plateaux de compression refroidis (1,2) et un dispositif pour refroidir la surface périphérique (35) du vitrage (30) au moyen de jets d'air, **caractérisé en ce que** le dispositif destiné à refroidir les surfaces périphériques (35) du vitrage (30) est constitué de rampes de soufflage parallèlépipédiques (32) disposées entre les plaques de refroidissement et de compression (1, 2) et dans lesquelles sont prévues, d'une part des lumières (34) pour les jets d'air de refroidissement dirigés vers la surface périphérique (35) du vitrage (30) et d'autre part, des ouvertures d'évacuation (40) disposées entre ces lumières (34), lesdites lumières (34) ayant un diamètre au moins égal à 1 mm et au plus égal à l'épaisseur des vitrages et les ouvertures d'évacuation (40) ayant une section transversale qui vaut au moins trois fois celle des lumières (34), les dimensions des plaques de refroidissement et de compression (1,2) ainsi que l'agencement et/ou la largeur (B) des rampes (32) étant tels que la distance (A) entre les orifices des lumières d'ajutages (34) et la surface périphérique (35) du vitrage (30) qui y est opposée vaille au moins deux fois et au plus six fois le diamètre des lumières d'ajutages (34).

2. Dispositif suivant la revendication 1, **caractérisé en ce que** la section transversale des ouvertures d'évacuation (40) vaut environ quatre fois celle des lumières (34).

3. Dispositif suivant la revendication 1 ou 2, **caractérisé en ce que** la distance (A) entre les orifices des lumières d'ajutages (34) et la surface périphérique (35) du vitrage (30) vaut trois à quatre fois le diamètre des lumières d'ajutages (34).

4. Dispositif suivant l'une quelconque des revendications 1 à 3, **caractérisé en ce que** les lumières (34) sont espacées l'une de l'autre de 10 à 25 mm.

5. Dispositif suivant l'une quelconque des revendications 1 à 4, **caractérisé en ce que** les rampes de soufflage (32) forment un cadre fermé entourant le vitrage.

6. Dispositif suivant l'une quelconque des revendications 1 à 5, **caractérisé** en ce **que** chaque lumière (34) est raccordée, par l'intermédiaire d'une tubulure (36) à un conduit de distribution (37) d'air froid entourant la plaque inférieure (1) raccordé à un ventilateur.

7. Dispositif suivant l'une quelconque des revendications 1 à 6, **caractérisé en ce qu**'une plaque de refroidissement et de compression (1) est une plaque métallique rigide (11) et l'autre plaque de refroidissement et de compression (2) est constituée d'un boîtier métallique (21) qui est fermé par une membrane flexible (22) et peut être alimenté au moyen d'eau sous pression.

8. Dispositif suivant la revendication 7, **caractérisé en ce que** la plaque métallique rigide (11) est munie d'un revêtement constitué par une couche élastiquement flexible (15) dont la résistance à la transmission de chaleur est comprise entre 0,1 x 10⁻³ et 0,25 x 10⁻³ m² x K x W⁻¹.

9. Dispositif suivant la revendication 7 ou 8, **caractérisé en ce que** le boîtier métallique (21) formant la plaque de refroidissement et de compression supérieur (2) est fermé par une pellicule élastiquement déformable (25) en polytétrafluoroéthylène d'une épaisseur de 0,1 à 0,4 mm et d'une résistance à la transmission de chaleur comprise entre 0,25 x 10⁻³ et 5 x 10⁻³ m² x K x W⁻¹.

10. Dispositif suivant l'une quelconque des revendications 7 à 9, **caractérisé** en ce que la couche élastiquement flexible (15) et la pellicule (25) sont recouvertes chacune par une mince toile métallique (26, 16) qui présente une épaisseur de 0,1 à 0,3 mm et dans la direction perpendiculaire à leur étendue superficielle, une résistance à la transmission de chaleur comprise entre 0,25 x 10⁻³ et 5 x 10⁻³ m² x K x W⁻¹.

## Patentansprüche

1. Vorrichtung zum Kontaktvorspannen einer Glasscheibe, mit zwei gekühlten Preßplatten (1, 2) und einer Einrichtung zum Kühlen der Umfangsfläche (35) der Glasscheibe (30) mit Luftstrahlen, **dadurch gekennzeichnet**, daß die Einrichtung zum Kühlen der Umfangsflächen (35) der Glasscheibe (30) aus zwischen den Kühl- und Pressplatten (1, 2) angeordneten Düsenleisten (32) besteht, in denen einerseits Düsenbohrungen (34) für die auf die Umfangsfläche (35) der Glasscheibe (30) gerichteten Kühlluftstrahlen und andererseits zwischen diesen Düsenbohrungen (34) Abströmöffnungen (40) vorgesehen sind, wobei die Düsenbohrungen (34) einen Durchmesser von wenigstens 1 mm und höchstens gleich der Dicke der Glasscheiben aufweisen, und die Abströmöffnungen (40) einen Querschnitt besitzen, der wenigstens dreimal so groß ist wie der Querschnitt der Düsenbohrungen (34), und daß die Flächenabmessungen der Kühl- und Pressplatten (1,2) sowie die Anordnung und/oder die Breite (B) der Düsenleisten (32) so bemessen sind, daß der Abstand (A) zwischen den Mündungen der Düsenbohrungen (34) und der diesen Düsenmündungen gegenüberliegenden Umfangsfläche (35) der Glasscheibe (30) wenigstens zweimal und höchstens sechsmal so groß ist wie der Durchmesser der Düsenbohrungen (34).

2. Vorrichtung nach Anspruch 1, dadurch gekennzeichnet, daß der Querschnitt der Abströmöffnungen (40) etwa viermal so groß ist wie der Querschnitt der Düsenbohrungen (34).

3. Vorrichtung nach Anspruch 1 oder 2, dadurch gekennzeichnet, daß der Abstand (A) zwischen den Mündungen der Düsenbohrungen (34) und der Umfangsfläche (35) der Glasscheibe (30) drei- bis viermal so groß ist wie der Durchmesser der Düsenbohrungen (34).

4. Vorrichtung nach einem der Ansprüche 1 bis 3, dadurch gekennzeichnet, daß die Düsenbohrungen (34) einen gegenseitigen Abstand von 10 bis 25 mm aufweisen.

5. Vorrichtung nach einem der Ansprüche 1 bis 4, dadurch gekennzeichnet, daß die Düsenleisten (32) einen die Glasscheibe umgebenden geschlossenen Rahmen bilden.

6. Vorrichtung nach einem der Ansprüche 1 bis 5, dadurch gekennzeichnet, daß jede Düsenbohrung (34) über ein Verbindungsröhrchen (36) an eine Sammelleitung (37) für die Kaltluft angeschlossen ist, die die untere Platte (1) umgibt, und mit einem Ventilator verbunden ist.

7. Vorrichtung nach einem der Ansprüche 1 bis 6, dadurch gekennzeichnet, daß eine Kühl- und Pressplatte (1) eine starre Metallplatte (11) ist, und die andere Kühl- und Pressplatte (2) aus einem Metallgehäuse (21) besteht, das durch eine flexible Membran (22) abgeschlossen und mit Druckwasser beaufschlagbar ist.

8. Vorrichtung nach Anspruch 7, dadurch gekennzeichnet, daß die starre Metallplatte (11) mit einem Überzug aus einer elastisch nachgiebigen Schicht (15) versehen ist, deren Wärmedurchgangswiderstand 0,1 x 10⁻³ bis 0,25 x 10⁻³ m² x K x W⁻¹ beträgt.

9. Vorrichtung nach Anspruch 7 oder 8, dadurch gekennzeichnet, daß das die obere Kühl- und Pressplatte (2) bildende Metallgehäuse (21) durch eine elastisch verformbare Folie (25) aus Polytetrafluoraethylen mit einer Dicke von 0,1 bis 0,4 mm und einem Wärmedurchgangswiderstand von 0,25 x 10⁻³ bis 5 x 10⁻³ m² x K x W⁻¹ abgeschlossen ist.

10. Vorrichtung nach Anspruch 7 bis 9, dadurch gekennzeichnet, daß die elastisch nachgiebige Schicht (15) und die Folie (25) jeweils durch ein dünnes Metallgewebe (26,16) abgedeckt sind, das eine Dicke von 0,1 bis 0,3 mm und in Richtung senkrecht zur Flächenausdehnung einen Wärmedurchgangswiderstand von 0,25 x 10⁻³ bis 5 x 10⁻³ m² x K x W⁻¹ aufweist.

## Claims

1. Device for toughening a glazing pane by contact, comprising two cooled compression plates (1, 2) and a device for cooling the peripheral surface (35) of the pane (30) by means of air jets, characterized in that the device intended for cooling the peripheral surfaces (35) of the pane (30) is constituted of parallelepipedic blowing bars (32), disposed between the cooling and compression plates (1, 2), and in which there are provided, on the one hand nozzle ducts (34) for the cooling air jets directed towards the peripheral surface (35) of the pane (30) and, on the other hand, discharge openings (40) disposed between these ducts (34), said ducts (34) having a diameter at least equal to 1 mm and at most equal to the thickness of the panes and the discharge openings (40) having a cross-sectional area which is at least three times that of the ducts (34), the dimensions of the cooling and compression plates (1, 2) and also the arrangement and/or width (B) of the blower bars (32) being such that the distance (A) between the orifices of the nozzle ducts (34) and the peripheral surface (35) of the pane (30) opposite thereto shall be at least twice and at most six times the diameter of the nozzle ducts (34).

2. Device according to Claim 1, characterized in that the cross-sectional area of the discharge openings (40) is approximately four times that of the ducts (34).

3. Device according to Claim 1 or 2, characterized in that the distance (A) between the orifices of the nozzle ducts (34) and the peripheral surface (35) of the pane (30) is from three to four times the diameter of the nozzle ducts (34).

4. Device according to any one of Claims 1 to 3, characterized in that the ducts (34) are spaced from one another by 10 to 25 mm.

5. Device according to any one of Claims 1 to 4, characterized in that the blower bars (32) form a closed frame surrounding the pane.

6. Device according to any one of Claims 1 to 5, characterized in that each duct (34) is connected, by means of a pipe (36), to a header pipe (37) for cold air surrounding the lower plate (1) and connected to a blower.

7. Device according to any one of Claims 1 to 6, characterized in that one cooling and compression plate (1) is a rigid metal plate (11) and the other cooling and compression plate (2) is constituted of a metal casing (21), which is closed by a flexible membrane (22) and can be supplied with pressurized water.

8. Device according to Claim 7, characterized in that the rigid metal plate (11) is provided with a covering constituted of an elastically flexible layer (15), the heat transmission resistance of which is from 0.1 x 10⁻³ to 0.25 x 10⁻³ m².K.W⁻¹.

9. Device according to Claim 7 or 8, characterized in that the metal casing (21) forming the upper cooling and compression plate (2) is closed by an elastically deformable sheet (25) of polytetrafluoroethylene having a thickness of from 0.1 to 0.4 mm and a heat transmission resistance of from 0.25 x 10⁻³ to 5 x 10⁻³ m².K.W⁻¹.

10. Device according to any one of Claims 7 to 9, characterized in that the elastically flexible layer (15) and the sheet (25) are each covered with a thin metal cloth (26, 16) which has a thickness of 0.1 to 0.3 mm and, in the direction perpendicular to their surface, a heat transmission resistance of from 0.25 x 10⁻³ to 5 x 10⁻³ m².K.W⁻¹.
